# EUROPÄISCHE PATENTSCHRIFT

(11) **EP 0 964 987 B1**
(45) Veröffentlichungstag und Bekanntmachung des Hinweises auf die Patenterteilung: **15.05.2002**
(21) Anmeldenummer: 98907883.7
(22) Anmeldetag: 03.02.1998
(51) Int. Cl.: F02D 9/10, B29C 45/16, F16K 1/226

(54) **VERFAHREN ZUM HERSTELLEN EINER SCHALTKLAPPE**
PROCESS FOR MANUFACTURING A SWITCHING VALVE
PROCEDE DE FABRICATION D'UNE SOUPAPE DE COMMUTATION

(30) Priorität: 07.03.1997 DE 29704180 U
(43) Veröffentlichungstag der Anmeldung: 22.12.1999
(73) Patentinhaber: SIEMENS AKTIENGESELLSCHAFT, 80333 München (DE)
(72) Erfinder: SCHEYTT, Mathias, D-93073 Neutraubling (DE); SCHWAIGER, Helmut, D-93055 Regensburg (DE); SCHMID, Stefan, D-93083 Obertraubling (DE); HAPPENHOFER, Werner, D-92442 Wackersdorf (DE)
(86) Internationale Anmeldenummer: DE9800292
(87) Internationale Veröffentlichungsnummer: WO9840615

(56) Entgegenhaltungen:
- EP-A- 0 494 344
- DE-A- 19 516 927
- FR-A- 2 687 601
- US-A- 3 724 812

## Beschreibung

Die Erfindung betrifft ein Verfahren zum Herstellen einer Schaltklappe, die insbesondere in einem Ansaugtrakt einer Brennkraftmaschine angeordnet ist.

Aus der WO 96/07022 ist eine Schaltklappe bekannt, die eine Welle hat und die längs der Drehachse der Welle langgestreckt ausgebildet ist. Die Schaltklappe ist in einer Öffnung zwischen zwei Saugrohren einer Ansaugeinrichtung angeordnet und schwenkbar gelagert. Die Saugrohre zweigen von einem ersten Sammler ab und münden in Einlässe von Zylindern der Brennkraftmaschine. Wenn die Schaltklappe derart verschwenkt ist, daß die Öffnung geschlossen ist, so entspricht die effektive Länge der Saugrohre, das heißt die Länge auf der die Gassäule im Saugrohr schwingt, der Länge der Saugrohre von dem ersten Sammler zu den Einlässen der Zylinder. Wenn die Schaltklappe derart verschwenkt ist, daß die Öffnung geöffnet ist, so entspricht die effektive Länge der Saugrohre dem Abstand von der Öffnung bis zu den Einlässen der Zylinder. Abhängig von Meßwerten der Betriebsgrößen der Brennkraftmaschine wird eine der zwei effektiven Längen der Saugrohre eingestellt. So kann die Aufladung der Zylinder verbessert werden und damit das maximale Drehmoment gesteigert werden.

An der Öffnung sind Anlagebünde vorgesehen, an denen die Schaltklappe zur Anlage kommt, wenn sie derart verschwenkt ist, daß die Öffnung geschlossen ist.

Aus der US 3 724 812 ist eine Schaltklappe bekannt, die eine Platte hat mit einer umlaufenden Nut an ihren Rändern. In die Platte sind Schlitze eingebracht, die mit der Nut kommunizieren. In die Nut und die Schlitze ist eine Dichtung eingebracht.

Die Aufgabe der Erfindung ist, ein einfaches und zuverlässiges Verfahren zum Herstellen einer Schaltklappe zu schaffen.

Die Aufgabe wird erfindungsgemäß durch die Merkmale des Anspruchs 1 gelöst. Das erfindungsgemäße Verfahren zeichnet sich dadurch aus, daß die Welle mit einem thermoplastischen Kunststoff derart umspritzt wird, daß sich ein Flügelkörper bildet. Der Flügelkörper ist so ausgebildet, daß er mindestens eine Aussparung aufweist. Eine Dichtmasse, mit der der Flügelkörper umspritzt wird, dringt in die Aussparung ein, so daß ein Formschluß zwischen der Dichtmasse und dem Flügelkörper besteht.

Vorteilhafte Ausgestaltungen der Erfindung sind in den Unteransprüchen gekennzeichnet. Mehrere Ausführungsbeispiele der Erfindung sind im folgenden unter Bezugnahme auf die schematischen Zeichnungen näher erläutert. Es zeigen:
- Figur 1: eine Brennkraftmaschine,
- Figur 2: einen Schnitt der Brennkraftmaschine gemäß Figur 1 längs der Schnittlinie II - II'
- Figur 3: eine mit dem erfindungsgemäßen Verfahren hergestellte Schaltklappe,
- Figur 4: eine Ausschnittsvergrößerung der Schaltklappe längs eines Schnittes entlang der Drehachse der Schaltklappe,
- Figur 5: eine weitere Ausschnittsvergrößerung der Schaltklappe in einer Schnittbilddarstellung,
- Figur 6: einen Schnitt längs einer Schnittlinie III - III' der Brennkraftmaschine gemäß Figur 1,
- Figur 7: einen ersten Arbeitsschritt zur Herstellung der Schaltklappe,
- Figur 8: einen zweiten Arbeitsschritt zur Herstellung der Schaltklappe,
- Figur 9: einen dritten Arbeitsschritt zur Herstellung der Schaltklappe.

Elemente gleicher Funktion und Konstruktion werden figurenübergreifend mit den gleichen Bezugszeichen gekennzeichnet.

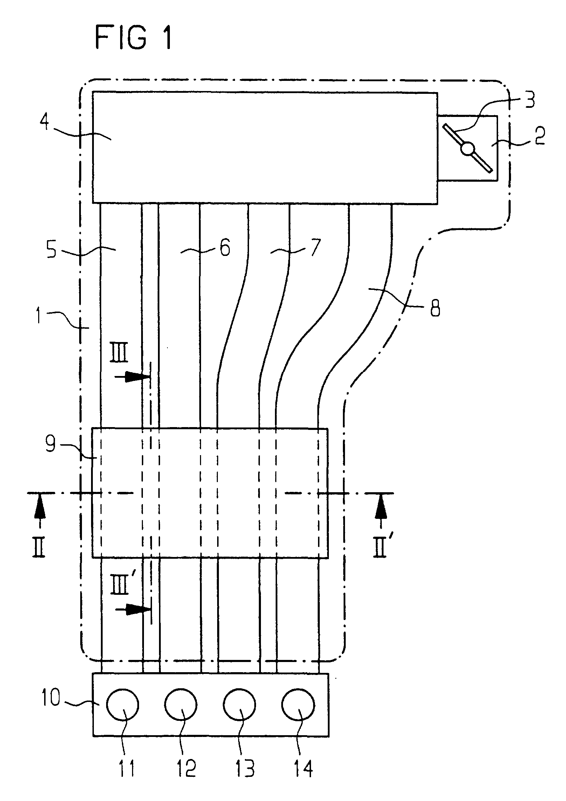

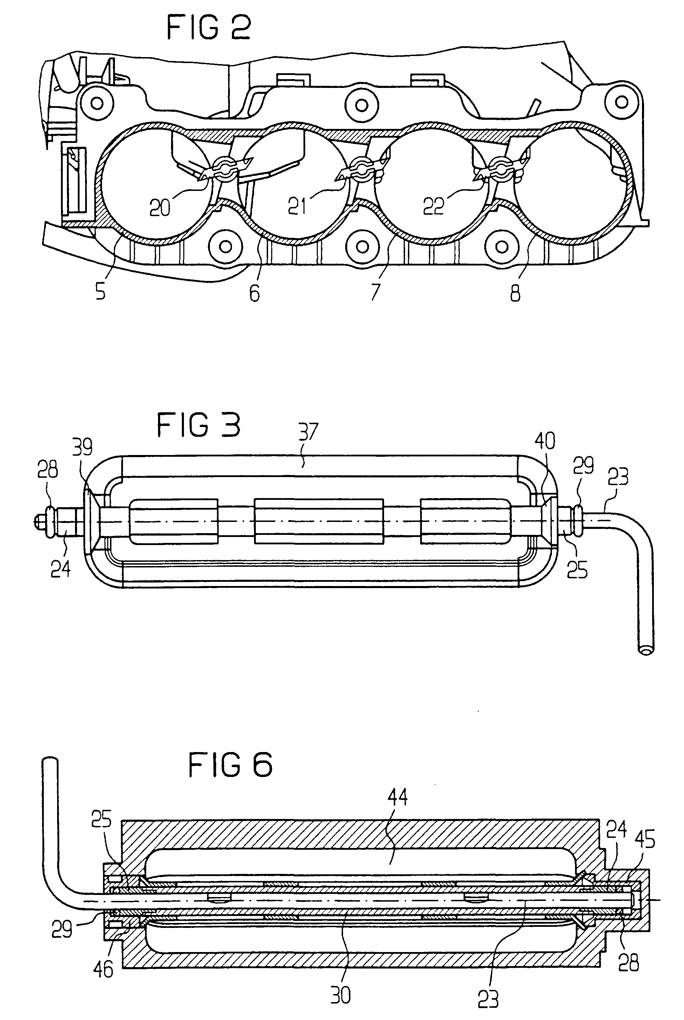

Eine Ansaugeinrichtung 1 (Figur 1) einer Brennkraftmaschine umfaßt einen Ansaugstutzen 2, in dem eine Drosselklappe 3 angeordnet ist. Ein erster Sammler 4 kommuniziert über den Ansaugstutzen 2 mit der Umgebungsluft. Saugrohre 5, 6, 7, 8 sind von dem ersten Sammler 4 über einen zweiten Sammler 9 zu Einlässen der Zylinder 11, 12, 13, 14 geführt. Die Zylinder 11, 12, 13, 14 sind in einem Motorblock 10 angeordnet. Im Bereich des zweiten Sammlers 9 sind Schaltklappen 20, 21, 22 angeordnet, die langgesteckt ausgebildet sind und schwenkbar gelagert sind (Figur 2). Abhängig von einer Betriebsgröße wie zum Beispiel einer Drehzahl N einer nicht dargestellten Kurbelwelle und/oder eines Luftmassenstroms und/oder eines Saugrohrdrucks werden die Schaltklappen 20, 21, 22 in eine Offenstellung oder eine Schließstellung verschwenkt. In der Offenstellung der Schaltklappen 20, 21, 22 kommunizieren die Saugrohre 5, 6, 7, 8 über die Öffnungen miteinander, so daß die effektive Saugrohrlänge, das heißt der Bereich mit durchgehender Strömung im Saugrohr, dem Abstand der Öffnungen zu den Einlässen der Zylinder 11, 12, 13, 14 entspricht. In der Schließstellung der Schaltklappen verschließen die Schaltklappen die Öffnungen zwischen den Saugrohren 5, 6, 7, 8, so daß die effektive Länge der Saugrohre der Länge der Saugrohre von dem ersten Sammler 4 bis zu den Einlässen der Zylinder 11, 12, 13, 14 entspricht.

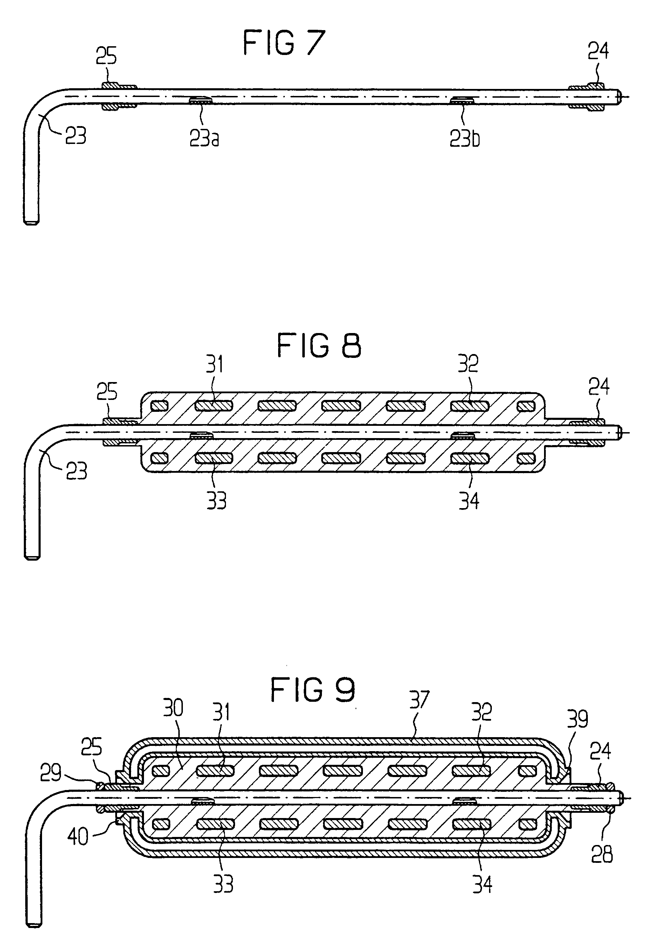

Der Aufbau der Schaltklappen 20, 21, 22 ist identisch. Im folgenden wird exemplarisch der Aufbau der Schaltklappe 20 beschrieben. Die Schaltklappe 20 (Figur 3) weist eine Welle 23 auf, die an einem freien Ende rechtwinklig abgekröpft ist. Dadurch ist ein einfaches Verschwenken zwischen der Offenstellung und der Schließstellung im eingebauten Zustand über ein nicht dargestelltes Gestänge möglich, das von einem ebenfalls nicht dargestellten Stellglied angetrieben wird. Das Stellglied ist vorzugsweise eine Druckdose oder ein Elektromotor. Auf die Welle 23 sind in einem vorgegebenen Abstand eine erste Hülse 24 und eine zweite Hülse 25 aufgebracht. Die erste und zweite Hülse 24, 25 sind paßgenau ausgeführt und dienen zur Lagerung in einer Lagerbuchse 45, 46 (Figur 6). Vorzugsweise sind darüberhinaus ein erster und ein zweiter Dämpfungsring 28, 29 so auf die Welle aufgebracht, daß sie mit der ersten beziehungsweise der zweiten Hülse 24, 25 zur Anlage kommt. Die Welle 23 ist formschlüssig mit einem Flügelkörper 30 verbunden. Der Formschluß wird durch Prägenasen 23a,b bewirkt. Die Welle 23 und der Flügelkörper 30 sind demnach starr verbunden. Der Flügelkörper 30 ist darüberhinaus mit Aussparungen 31, 32, 33, 34 versehen. Eine Dichtmasse ist um den Flügelkörper 30 gespritzt und so ausgebildet, daß sie randseitig der Schaltklappe eine Dichtlippe 37 bildet, die im Schließzustand mit einem Anlagebund der Öffnung zur Anlage kommt und die Öffnung somit dicht verschließt. Darüberhinaus bildet die Dichtmasse eine erste und eine zweite Dichthaube 39, 40, die an den gegenüberliegenden axialen Enden der Schaltklappe 20 konzentrisch zu der Welle 23 angeordnet sind. Die Dichthauben 39, 40 sind jeweils zu der Seite hin offen, die der Schaltklappe 20 abgewandt ist. Auf der Seite, die der Schaltklappe zugewandt ist, sind sie formschlüssig mit der Schaltklappe verbunden.

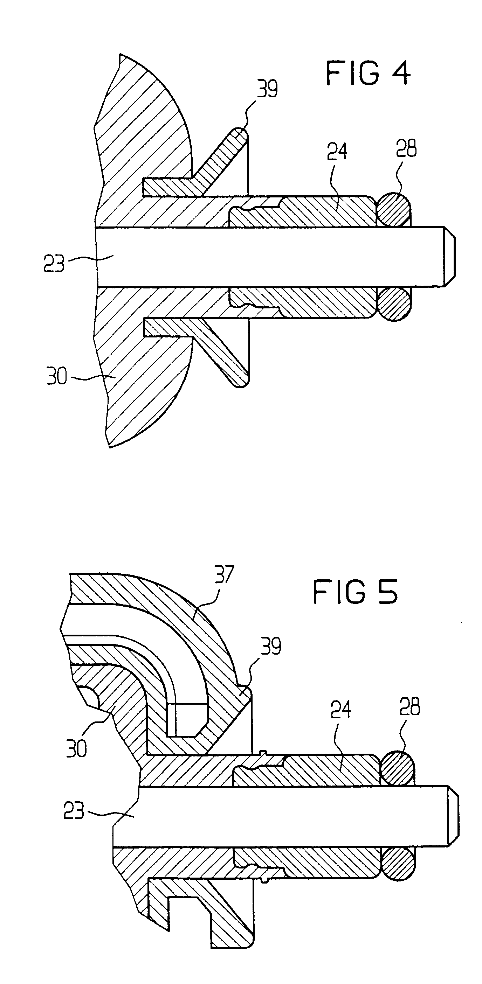

Figur 4 zeigt eine Detailvergrößerung der Schaltklappe 20 in einem Schnitt längs der Drehachse der Schaltklappe. Die Dichthaube 39 ist kegelförmig ausgebildet. Sie ist aus elastischem Material, vorzugsweise aus einem Elastomerkunststoff. Die Dichthaube 39 kann vorteilhaft auch paraboloidförmig, halbkugelförmig oder zylinderförmig ausgebildet sein.

Figur 5 zeigt eine bevorzugte Ausführungsform der Schaltklappe 20 in einer Detailvergrößerung in einer Schnittbilddarstellung längs der Drehachse der Schaltklappe 20. Die Dichthaube 39 ragt in Form einer Wulst über die Dichtlippe 37 hinaus.

Figur 6 ist eine Schnittdarstellung längs einer Schnittlinie III - III' gemäß Figur 1. In eine Öffnung 44 und eine erste Lagerbuchse 45 und eine zweite Lagerbuchse 46 ist die Schaltklappe 20 eingebracht. Die erste und zweite Lagerbuchse 45, 46 sind vorzugsweise aus Bronze gefertigt und paßgenau zu der ersten und zweiten Hülse 24, 25. Die Schaltklappe ist in Figur 6 in ihrem Offenzustand dargestellt. Die erste und die zweite Dichthaube 39, 40 sind gegen die erste beziehungsweise die zweite Lagerbuchse 45, 46 gepreßt, können jedoch aufgrund ihrer Elastizität abhängig vom Anpreßdruck nach außen wandern. So wird mit einfachen Mitteln eine axiale Dichtung der Schaltklappe um die Lagerbuchse herum bewirkt. Durch die axiale Dichtung wird gewährleistet, daß Druckpulsationen im Schließzustand der Schaltklappe 20 nicht von dem Saugrohr 5 auf das Saugrohr 6 und umgekehrt übertragen werden. Durch die erste und zweite Dichthaube 39, 40 erfolgt des weiteren ein axialer Spielausgleich mit einer schwimmenden Lagerung. Dadurch ist gewährleistet, daß die Schaltklappe 20 temperaturunabhängig und unabhängig von Fertigungstoleranzen mittig in der Öffnung 44 gelagert ist. Die Dichthaube 39, 40 dämpft darüber hinaus durch Vibrationen der Brennkraftmaschine hervorgerufene und von der ersten oder zweiten Lagerbuchse 45, 46 und der ersten beziehungsweise zweiten Hülse 24, 25 erzeugten Geräusche. Die Dichthaube 39, 40 dämpft darüber hinaus ein Überstromgeräusch, das durch ein Klappern der Schaltklappe 20 und Druckunterschieden zwischen den Saugrohren 5, 6 hervorgerufen wird, stark ab. Dies ist ein gewichtiger Vorteil, da das Überstromgeräusch als unangenehmes Pfeifen hörbar wird und immer strengere gesetzliche Vorschriften gelten, die Grenzwerte für die Amplitude der von einem Kraftfahrzeug erzeugten Schallwellen festlegen.

Im folgenden wird das Herstellen der Schaltklappe beschrieben. In einem ersten Fertigungsschritt wird die Welle 23 (Figur 7) an einem freien Ende rechtwinklig abgekröpft und mit Prägenasen 23a,b versehen. Die Welle weist in einer kostengünstigen Ausführungsform größere Fertigungstoleranzen auf. Auf eine spanende Bearbeitung der Welle wird verzichtet. Anschließend werden die erste Hülse 24 und die zweite Hülse 25 in einem vorgegebenen axialen Abstand auf die Welle 23 aufgebracht und radial verpreßt. Die Hülsen sind vorzugsweise paßgenau zu den Lagerbuchsen ausgebildet.

In einem zweiten Arbeitsschritt (Figur 8) wird die Welle 23 in ein Spritzwerkzeug eingebracht und die Welle 23 zwischen der ersten und der zweiten Hülse 24, 25 mit einem thermoplastischen Kunststoff derart umspritzt, daß sich der Flügelköper 30 bildet. Die Prägenasen 23a,b gewährleisten, daß der Flügelkörper 30 formschlüssig mit der Welle verbunden ist. Der Flügelkörper weist mehrere Aussparungen 31, 32, 33, 34 auf.

Anschließend wird der Flügelkörper (Figur 9) mit einer Dichtmasse, die vorzugsweise als Elastomerkunststoff ausgebildet ist, derart umspritzt, daß sich randseitig an dem Flügelkörper eine Dichtlippe bildet. Vorzugsweise erfolgt das Umspritzen mit der Dichtmasse derart, daß sich an den gegenüberliegenden axialen Enden des Flügelkörpers 30 die erste und die zweite Dichthaube 39, 40 ausbilden. Der Flügelkörper 30 wird vollständig mit der Dichtmasse umspritzt. Die Dichtlippe 37 und die erste und zweite Dichthaube 39,40 werden demnach in einem Spritzvorgang hergestellt.

Die Aussparungen 31, 32, 33, 34 sind vorzugsweise als Langlöcher ausgeführt und sind nach dem Umspritzen mit der Dichtmasse gefüllt. Dadurch ist ein Formschluß mit dem Flügelkörper gewährleistet. Dies hat den Vorteil, daß keine Klebemittel oder Befestigungsmittel verwendet werden müssen, auf ein Vulkanisieren verzichtet werden kann und die Dichtmasse auch fest anliegt, wenn hohe Reibkräfte durch ein strömendes Fluid auf sie einwirken.

Das beschriebene Herstellungsverfahren hat den Vorteil, daß die Schaltklappe in sehr wenigen Fertigungsschritten gefertigt werden kann und die Schaltklappe ein geringes Gewicht aufweist aber dennoch eine hohe mechanische Haltbarkeit hat. Falls die Welle aus Stahl besteht, ist eine hohe Steifigkeit der Schaltklappe gewährleistet. Außerdem ist das Dichtverhalten der Schaltklappe optimiert.

Die Flügelklappe kann alternativ auch drei oder vierarmig ausgebildet sein.

Die Erfindung ist nicht auf die hier dargestellten Ausführungsbeispiele beschränkt.

## Patentansprüche

1. Verfahren zum Herstellen einer Schaltklappe (20,21,22), die einen Flügelkörper (30) aufweist, der mit einer Welle (23) längs ihrer Drehachse verbunden ist, bei dem:
- eine erste Hülse (24) und eine zweite Hülse (25) in einem vorgegebenen axialen Abstand auf die Welle (23) aufgebracht werden und radial verpreßt werden,
- die Welle (23) zwischen der ersten und der zweiten Hülse (24, 25) mit einem thermoplastischen Kunststoff derart umspritzt wird, daß sich der Flügelkörper (30) bildet, der mindestens eine Aussparung (31) aufweist, und
- der Flügelkörper (30) mit einer Dichtmasse derart umspritzt wird, daß sich randseitig an dem Flügelkörper (30) eine Dichtlippe (37) bildet.

2. Verfahren nach Anspruch 1, **dadurch gekennzeichnet, daß** die Welle (23) an einer Stelle zwischen der ersten und der zweiten Hülse (24, 25) derart verquetscht wird, daß sie eine Prägenase (23a, 23b) aufweist.

3. Verfahren nach Anspruch 1, **dadurch gekennzeichnet, daß** der Flügelkörper (30) mit der Dichtmasse derart umspritzt wird, daß sich an den gegenüberliegenden axialen Enden des Flügelkörpers (30) eine erste und eine zweite Dichthaube (39, 40) ausbilden.

4. Verfahren nach Anspruch 1, **dadurch gekennzeichnet, daß** jeweils ein Dämpfungsring (28,29) auf die Welle (23) an der dem Flügelkörper (30) abgewandten Seite der Hülse (24, 25) aufgebracht wird, so daß er mit der Hülse (24, 25) zur Anlage kommt.

5. Verfahren nach Anspruch 1, **dadurch gekennzeichnet, daß** die Aussparung (31) als Langloch ausgebildet ist.

6. Verfahren nach Anspruch 1, **dadurch gekennzeichnet, daß** die Welle (23) an einem freien Ende gekröpft wird.

## Claims

1. Procedure for manufacturing a switch flap (20, 21, 22) which has a vane (30) which is bonded to a shaft (23) along its axis of rotation, in which:
- a first sleeve (24) and a second sleeve (25) are introduced onto the shaft (23) at a predetermined axial distance and compressed in a radial direction,
- the shaft (23) is injection-moulded between the first and second sleeves (24, 25) using a thermoplastic preparation to form the vane (30) which possesses at least one recess (31), and
- the vane (30) is injection-moulded with a sealing compound so that a sealing lip (37) is formed around the edges of the vane (30).

2. Procedure according to Claim 1, **characterised in that** the shaft (23) is compressed at a point between the first and second sleeves (24, 25) so that it possesses an embossed lug (23a, 23b).

3. Procedure according to Claim 1, **characterised in that** the vane (30) is injection-moulded with sealing compound so as to form a first and a second sealing cap (39, 40) at the opposite axial ends of the vane (30).

4. Procedure according to Claim 1, **characterised in that** a damping ring (28, 29) is fitted to the shaft (23) on the side of the sleeves (24, 25) facing outwards from the vane (30), so that in each case it bears on the sleeves (24, 25).

5. Procedure according to Claim 1, **characterised in that** the recess (31) is made in the shape of an elongated slot.

6. Procedure according to Claim 1, **characterised in that** the shaft (23) is bent at right angles at a free end.

## Revendications

1. Procédé de fabrication d'un papillon de commutation (20, 21, 22) qui comprend un corps à ailettes (30) qui est relié à un axe (23) le long de son axe géométrique de rotation, selon lequel :
- un premier manchon (24) et un second manchon (25) sont montés sur l'axe (23) avec un espacement axial préfixé et sont serrés radialement,
- l'axe (23) est entouré, par injection, d'une matière thermoplastique entre le premier et le second manchons (24, 25), d'une manière telle que se forme le corps à ailettes (30), lequel comporte au moins un évidement (31), et
- le corps à ailettes (30) est entouré par injection d'une masse d'étanchéité d'une manière telle qu'une lèvre d'étanchéité (37) se forme suivant le bord sur le corps à ailettes (30).

2. Procédé suivant la revendication 1, **caractérisé en ce que** l'axe (23) est écrasé en un emplacement situé entre le premier et le second manchons (24, 25) d'une manière telle qu'il présente un bec (23a, 23b) obtenus par repoussage.

3. Procédé suivant la revendication 1, **caractérisé en ce que** le corps à ailettes (30) est entouré par injection d'une masse d'étanchéité, d'une manière telle qu'un premier et un second capuchons d'étanchéité (39, 40) se forment aux extrémités axiales opposées du corps à ailettes (30).

4. Procédé suivant la revendication 1, **caractérisé en ce que**, pour chaque manchon (24, 25), une bague d'amortissement (28, 29) respective est montée sur l'axe (23) du côté du manchon considéré qui est situé à l'opposé du corps à ailettes (30), d'une manière telle qu'il vient en appui sur le manchon (24, 25).

5. Procédé suivant la revendication 1, **caractérisé en ce que** l'évidement (31) est réalisé sous forme d'un trou allongé.

6. Procédé suivant la revendication 1, **caractérisé en ce que** l'axe (23) est coudé à une extrémité libre.
